# FASCICULE DE BREVET EUROPEEN

(11) **EP 0 309 420 B1**
(45) Date de publication et mention de la délivrance du brevet: **06.07.1994**
(21) Numéro de dépôt: 88830368.2
(22) Date de dépôt: 14.09.1988
(51) Int. Cl.: F21V 21/28, F16C 11/08, F16C 11/04

(54) **Articulation cylindrique**
Zylindrisches Gelenk
Cylindrical articulation

(30) Priorité: 22.09.1987 IT 949087
(43) Date de publication de la demande: 29.03.1989
(73) Titulaire: PEISA S.r.L., 50132 Firenze (IT)
(72) Inventeur: Pini, Belisario, I-50141 Firenze (IT)
(74) Mandataire: Martini, Lazzaro

(56) Documents cités:
- EP-A- 0 076 007
- DE-A- 3 603 981
- DE-U- 7 838 325
- GB-A- 1 438 760
- US-A- 3 278 203
- US-A- 4 322 098

## Description

La présente invention concerne une articulation cylindrique pour lampe à tige ou lampadaire avec porte-lampe ou douille orientable, pour porte de meuble et autres utilisations.

Il est connu que les articulations ou joints à rotule connus à ce jour, aussi bien sphériques que cylindriques, sont réalisés en métal avec les extrémités filetées pour permettre le raccordement avec la tige ou pied et avec le porte-lampe ou douille au moyen d'un manchon à vis, et que la force de frottement est déterminée par un ressort coaxial avec le câble électrique qui passe à travers l'articulation.

De telles articulations ne garantissent pas l'isolation électrique parfaite des conducteurs, en particulier dans la zone de pliage ou l'usure de la gaine est plus importante, comportent des risques de dévissage spontané des manchons pendant la manoeuvre d'orientation du porte-lampe, et présentent un coût relativement élevé en raison des usinages mécaniques nécessaires.

On connaît, d'après le document US-A 3278203, une articulation sphérique pour lampes et objets similaires.

Mais cette articulation connue comprend des parties de structure en métal, et par conséquent n'est pas en mesure de garantir une sécurité d'exercice maximale si un conducteur de protection relié à la terre n'est pas prévu. Par ailleurs, la complexité structurale de cette articulation connue en rend la fabrication coûteuse et ceci entraîne une augmentation du coût de fabrication des lampes qui en sont équipées.

On connaît également, d'après le document DE-U 7838325, une articulation cylindrique pour lampes électriques, laquelle comprend un axe plein passant transversalement à travers la tige de la lampe et dans la calotte de cette dernière.

Mais ceci ne permet pas de faire passer les conducteurs d'alimentation à travers ladite articulation, de sorte qu'un volume supérieur est nécessaire pour permettre le logement des conducteurs précités et leur mouvement pendant la rotation de la calotte.

La présente invention a pour but d'éliminer les inconvénients précités en proposant une articulation cylindrique, montage presentant de sécurité augmentée, de facile et rapide, de fiabilité très élevée, et de faible coût.

Ce résultat a été atteint avec les caractéristiques de la revendication 1.

Avantageusement, la surface extérieure du fuseau est cannelée avec plusieurs ailettes flexibles pour permettre son adaptation à différents diamètres intérieurs de la tige ou pied.

Selon d'autres caractéristiques, l'articulation est réalisée en matière plastique résistante à la chaleur pour garantir une isolation électrique optimale des conducteurs et également une isolation thermique élevée par rapport au porte-lampe ou douille.

La solution proposée par la présente invention permet la réalisation d'une articulation cylindrique à friction isolante, de montage et de réglage simples et fiables et de coût de fabrication réduit.

Ces avantages et caractéristiques ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels:
- la FIG. 1 représente une lampe de bureau pourvue d'une articulation en conformité avec l'invention;

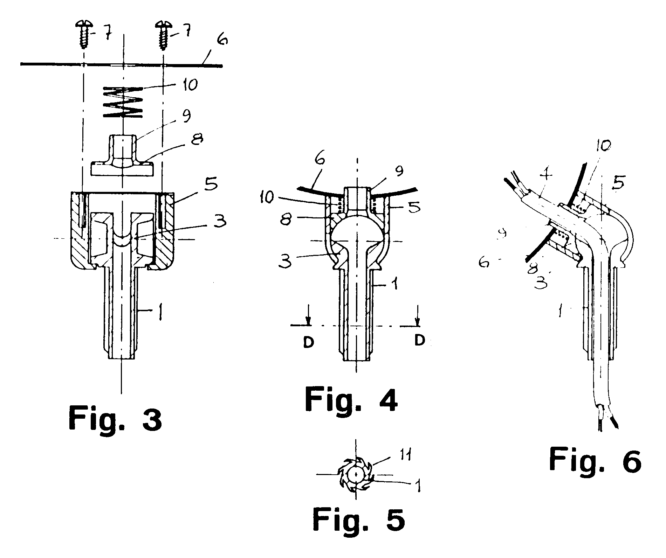

- la FIG. 2 représente la vue axonométrique d'ensemble de l'articulation utilisée pour la lampe de la Fig. 1;
- la FIG. 3 représente, en section verticale, la vue éclatée de l'articulation de la Fig. 2;
- la FIG. 4 représente la vue en coupe verticale de l'articulation de la Fig. 2 avec la parabole ou abat-jour monté;
- la FIG. 5 représente la vue en coupe suivant la ligne D-D de la Fig. 4;
- la FIG. 6 représente la vue en coupe verticale de l'articulation de la Fig. 4 avec la parabole ou abat-jour partiellement incliné par rotation.

Réduite à sa structure essentielle et en référence aux dessins annexés, une articulation cylindrique à friction pour lampe à tige ou lampadaire, avec porte-lampe ou douille orientable, comprend conformément à l'invention:
- un fuseau central tubulaire 1 à engager à baïonnette dans la tige ou pied 2 de la lampe et à travers lequel passe un câble électrique 4, et avec une tête cylindrique 3 à axe perpendiculaire à celui du fuseau, percée suivant l'axe de celui-ci et ouverte vers le haut pour permettre le passage du câble électrique; la surface extérieure du fuseau 1 présente plusieurs rainures ou cannelures longitudinales pour définir autant d'ailettes flexibles 11 de manière être adaptable à différents diamètres de tige, tout en assurant un montage sûr et permanent;
- un protecteur 5 en forme de boîtier, monté fou sur les extrémités cylindriques de ladite tête 3 et à même de délimiter une cavité ouverte vers le haut;
- un patin 8, inséré dans la cavité du protecteur sur le sommet de la tête du fuseau, avec une base en forme de gouttière semicirculaire, pour appuyer sur l'extrémité cylindrique correspondante de la tête 3, et avec une queue 9 percée axialement pour le passage du câble 4; sur ledit patin est monté un ressort 10 en hélice cylindrique qui est interposé, à force, entre la base du patin et la parabole 6 de la lampe, et maintenu en place au moyen de deux vis 7 insérées dans le protecteur 5. La résistance à la rotation du protecteur 5 par rapport à la tête du fuseau 1 est déterminée par la pression du ressort 10 sur le patin 8.

Une telle articulation, excepté le ressort 10, est réalisée en matière plastique artificielle résistante à la chaleur en assurant simultanément l'isolation électrique et celle thermique du câble.

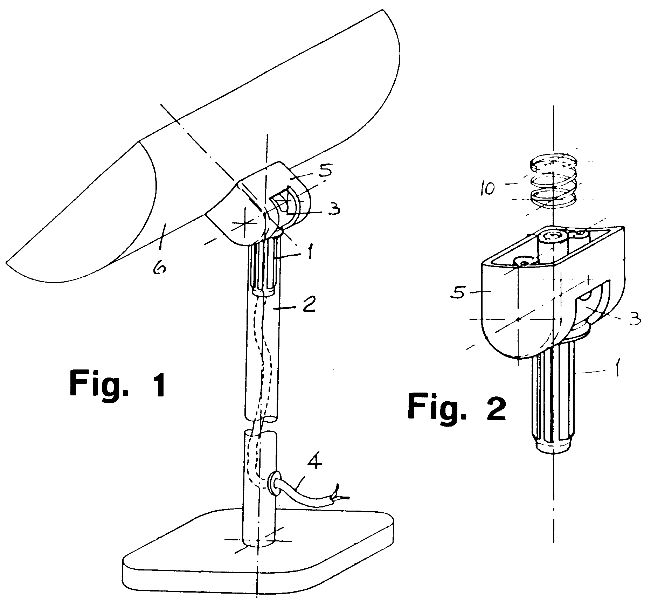

En référence à la Fig. 1 des dessins annexés, l'articulation selon l'invention peut, par exemple, être appliquée à une lampe à pied de bureau, permettant ainsi d'obtenir coûts réduits un produit ayant une esthétique agréable, de grande fiabilité, et avec une amplitude d'orientation supérieure à 120°.

## Revendications

1. Zylindrisches Gelenk für eine Stiellampe oder Stehlampe mit einstellbarem Lampenträger bzw. einstellbarer Lampenfassung, für Möbeltürflügel oder für andere Verwendungen, umfassend eine als zylindrische Wendel ausgebildete Feder (10), welche mit Spannung zwischen der Basis einer Abschlußschale des Gelenkes und dem Parabolschirm einer Lampe bzw. einem anderen beweglichen Element eingespannt ist, dadurch **gekennzeichnet,** daß sie aus hitzebeständigem Plastikmaterial hergestellt ist und umfaßt:
- einen rohrförmigen Schaft (1) für einen Bajonetteingriff in den Stiel oder Fuß (2) der Lampe oder in ein anderes festes Trägerelement, mit einem zylindrischen Kopf (3) mit einer zur Achse des Schaftes (1) rechtwinkeligen Achse, wobei dieser Kopf (3) quer zu seiner eigenen Längsachse durchbohrt und nach oben offen ist, um den Durchtritt eines elektrischen Kabels (4) zu ermöglichen;
- eine Schutzkappe (5) in Form eines einen Hohlraum aufweisenden Gehäuses, welche drehbar auf den Enden dieses Kopfes (3) des Schaftes (1) gelagert und an dem Parabolschirm bzw. Lampenträger (6) einer Lampe oder an einem anderen beweglichen Element mittels zweier Befestigungsschrauben (7) befestigt ist; daß die Schale (8) in den Hohlraum der Schutzkappe eingelegt ist; daß die Schale (8) eine Basis in Form einer Halbkreisrinne hat, die auf den Enden des Kopfes (3) aufliegt; daß die Schale (8) einen durchbohrten Fortsatz (9) hat; und daß diese Schale (8) mittels der in die Schutzkappe (5) eingeschraubten Schrauben (7) festgehalten wird.

2. Gelenk nach Anspruch 1, dadurch **gekennzeichnet,** daß die äußere Oberfläche des Schaftes (1) kanneliert ist derart, daß mehrere flexible Flügel (11) gebildet werden.

## Claims

1. Articulation cylindrique pour lampe à tige ou lampadaire, avec porte-lampe ou douille orientable, pour porte de meuble et autres utilisations, comprenant un ressort (10) en hélice cylindrique qui est interposé, à force, entre la base d'un patin de fermeture de l'articulation et la parabole d'une lampe ou autre élément mobile, caractérisé en ce qu'elle est réalisée en matière plastique résistante à la chaleur, et comprend:
- un fuseau tubulaire (1) à engager à baïonnette dans la tige ou pied (2) de la lampe ou dans un autre élément fixe de support avec une tête cylindrique (3) à axe perpendiculaire à celui du fuseau (1), laquelle tête (3) est percée transversalement par rapport à son propre axe longitudinal et ouverte vers le haut pour permettre le passage d'un câble électrique (4);
- un protecteur (5) en forme de boîtier avec une cavité, monté à rotation sur les extrémités de ladite tête (3) du fuseau (1) et fixé avec la parabole ou douille (6) d'une lampe ou un autre élément mobile, au moyen de deux vis de fixation (7); en ce que ledit patin (8) est inséré dans la cavité dudit protecteur (5); en ce que ledit patin (8) a une base en forme de gouttière semicirculaire en appui sur les extrémités de la tête (3); en ce que ledit patin (8) a une queue percée (9); et en ce que ledit patin (8) est maintenu en place au moyen desdites vis (7) insérées dans le protecteur (5).

2. Articulation selon la revendication 1, caractérisée en ce que la surface extérieure dudit fuseau (1) est cannelée de manière à définir plusieurs ailettes flexibles (11).

## Patentansprüche

1. Cylindrical joint for lamp on rod support or floor standard lamp, with lamp carrier or movable bush, to carry items and other uses, made of plastic heat-resistant material and including a helical cylindrical spring (10), which is forcibly interposed between the base of a joint closing runner and the parabola of a lamp or other mobile part, characterized in that it includes:
- a tubular spindle (1) to engage in a bayonet in the rod or foot (2) of the lamp or in another fixed support part with a cylindrical head (3) with its axis perpendicular to that of the spindle (1), which head is drilled transversely to its own longitudinal axis and open upwards to enable an electrical cable (4) to pass through;
- a guard (5) in the form of a collet with a hole mounted to rotate on the ends of the said head (3) of the spindle (1) and fixed to the parabola or bush (6) of a lamp or another mobile part by means of two fixing screws (7) ; where the said runner (8) is inserted in the hole of the said guard; where the said runner (8) has a base in the shape of a semi-circular duct at the ends of the head (3); where the said runner (8) has a drilled end (9); and where the said runner (8) is hold in place by means of the said screws (7) inserted in the guard (5).

2. Joint according to Claim 1, characterized by the fact that the external surface of the said spindle (1) is grooved so as to define several flexible fins (11) .
